**Europäisches Patentamt**

**European Patent Office**

**Office européen des brevets**

(11) Veröffentlichungsnummer: **0 215 334**
**B1**

(12) # EUROPÄISCHE PATENTSCHRIFT

(45) Veröffentlichungstag der Patentschrift:
24.01.90

(21) Anmeldenummer: **86111657.2**

(22) Anmeldetag: **22.08.86**

(51) Int. Cl.⁴: **H02K 5/15**

(54) **Am Ständerblechpaket einer elektrischen Maschine befestigter Lagerbügel.**

(30) Priorität: **06.09.85 DE 3531899**

(43) Veröffentlichungstag der Anmeldung:
**25.03.87 Patentblatt 87/13**

(45) Bekanntmachung des Hinweises auf die Patenterteilung:
**24.01.90 Patentblatt 90/4**

(84) Benannte Vertragsstaaten:
**AT DE FR GB IT NL**

(56) Entgegenhaltungen:
**DE-A- 2 405 605**
**FR-A- 2 516 718**
**GB-A- 2 061 775**
**US-A- 3 497 735**

(73) Patentinhaber: **Siemens Aktiengesellschaft,
Wittelsbacherplatz 2, D-8000 München 2(DE)**

(72) Erfinder: **Rohloff, Rolf, Flürleinstrasse 16,
D-8700 Würzburg 25(DE)**

## Beschreibung

Die Erfindung bezieht sich auf einen am Ständerblechpaket einer elektrischen Maschine befestigten Lagerbügel gemäß Oberbegriff des Anspruchs 1; eine derartige Befestigung ist aus der US-A 3 497 735 bzw. der DE-A1 1 488 692 bekannt.

Im bekannten Fall der DE-A1 1 488 692 werden topfförmig ausgebildete Lagerschilde mit einem axial vorstehenden hohlzylindrischen Rand zunächst das Ständerblechpaket berührungslos übergreifend zentriert zu diesem in einer Montage-Lehre gehalten und anschließend durch Magneform-Umformung des übergreifenden Randes am Außenumfang des Ständerblechpaketes befestigt; zur zusätzlichen Fixierung können in die von dem verformten übergreifenden hohlzylindrischen Rand der Lagerschilde übergriffenen Randzonen des Ständerblechpaketes eine oder mehrere Rillen eingebracht sein, in die bei der Magneform-Umformung Material des übergreifenden Lagerschildteiles radial eingedrückt wird.

Eine Befestigung der Lagerbügel mittels angeformter Laschen wird in der DE-A1 3 219 518 beschrieben; in diesem bekannten Fall stehen die Laschen radial über den Gehäusemantel über. Die Laschen weisen je eine Durchbohrung auf, durch die Schraubenbolzen von dem einen Lagerschild über die Außenfläche des Gehäusemantels bis zu der Lasche des anderen Lagerschildes durchgesteckt und dann die zur radialen Zentrierung mit ihrer Außenwand an der Innenfläche des Gehäusemantels anliegenden Lagerschilde axial gegen den Gehäusemantel festgespannt und dadurch auch axial fixiert werden können.

Aufgabe der vorliegenden Erfindung ist es, die gegenseitige Verbindung von Lagerbügel und Ständerblechpaket in fertigungs- und montagetechnischer Hinsicht, insbesondere für einen automatengerechten Zusammenbau durch Handhabungsautomaten ohne Minderung der Betriebssicherheit verbessern zu können.

Die Lösung dieser Aufgabe gelingt bei einem am Ständerblechpaket einer elektrischen Maschine befestigten Lagerbügel der eingangs genannten Art erfindungsgemäß durch die Lehre des Anspruchs 1; vorteilhafte Ausgestaltungen der Erfindung sind jeweils Gegenstand der Unteransprüche.

Durch die erfindungsgemäße Laschenbefestigung können die Lagerbügel auch in einer für einen rauhen Betriebseinheit sicheren Weise sowohl radial zentriert als auch radial und axial formschlüssig fixiert werden, wobei in einer für eine Automatenfertigung besonders vorteilhaften Weise ein einziger Handhabungsschritt eine Vielzahl von bisher üblichen Montagefolgen, wie z.B. das Durchstecken der Schraubenbolzen, das Aufbringen der Schrauben, das Festziehen der Schrauben und deren für einen rauhen Betriebseinsatz zusätzlich notwendige Sicherung ersetzen kann.

Um einerseits eine möglichst festsitzende formschlüssige Fixierung zwischen den in die Einstecköffnung eingesteckten Laschen der Lagerbügel und dem Blechpaket zu gewährleisten und andererseits eine zu starke Verformung des Ständerblechpaketes durch einen zu großen Verstemmdruck vermeiden zu können, ist nach Ausgestaltungen der Erfindung vorgesehen, daß die Laschen eine Ausnehmung im Bereich der Verformung aufweisen und/oder daß die Einstecköffnungen an ihrer radial innen liegenden Seite neben einer radialen Auflagefläche für die eingesteckte Lasche jeweils eine radial vertiefte Ausnehmung im Bereich der Verformung aufweisen, derart daß auch bereits bei geringem Verstemmdruck im Sinne einer guten formschlüssigen Verbindung genügend Material des zu verbindenden Bauteils in die gezielt vorgesehene vertiefte Ausnehmung eindringen kann. In fertigungstechnisch besonders vorteilhafter Weise werden die Einstecköffnungen bzw. die radial vertieften Ausnehmungen durch entsprechende Freistanzungen der hintereinander gestapelten Blechlamellen bei deren Ausstanzen aus einem Blechband oder einer Blechplatine gleichzeitig mit freigestanzt.

Die Erfindung sowie weitere vorteilhafte Ausgestaltungen werden anhand schematisch dargestellter Ausführungsbeispiele in der Zeichnung näher erläutert; darin zeigen:

Fig. 1 eine axiale Draufsicht auf einen Elektrokleinmotor mit im Statorblechpaket erfindungsgemäß verankerten, eine Rotorwelle aufnehmenden Lagerbügel;

Fig. 2 ein Teilschnittbild der Fig.1 gemäß Schnittverlauf II-II;

Fig. 3 in einer perspektivischen Explosions-Darstellung eine erste Ausführung eines erfindungsgemäß ausgebildeten Lagerbügel bzw. Statorblechpaketes;

Fig. 4 eine zweite Ausführung eines erfindungsgemäß ausgebildeten Lagerbügels bzw. Statorblechpaketes;

Fig. 5,6 die Befestigung des Lagerbügels gemäß Fig.3 im Bereich des verformten Statorblechpaketes jeweils vor bzw. nach der Verformung durch ein von außen angesetztes Verstemmwerkzeug;

Fig. 7,8 in einem Teilschnittbild den Lagerbügel bzw. das Statorblechpaket gemäß Fig.4 vor bzw. nach der Verformung durch ein von außen angesetztes Verstemmwerkzeuges.

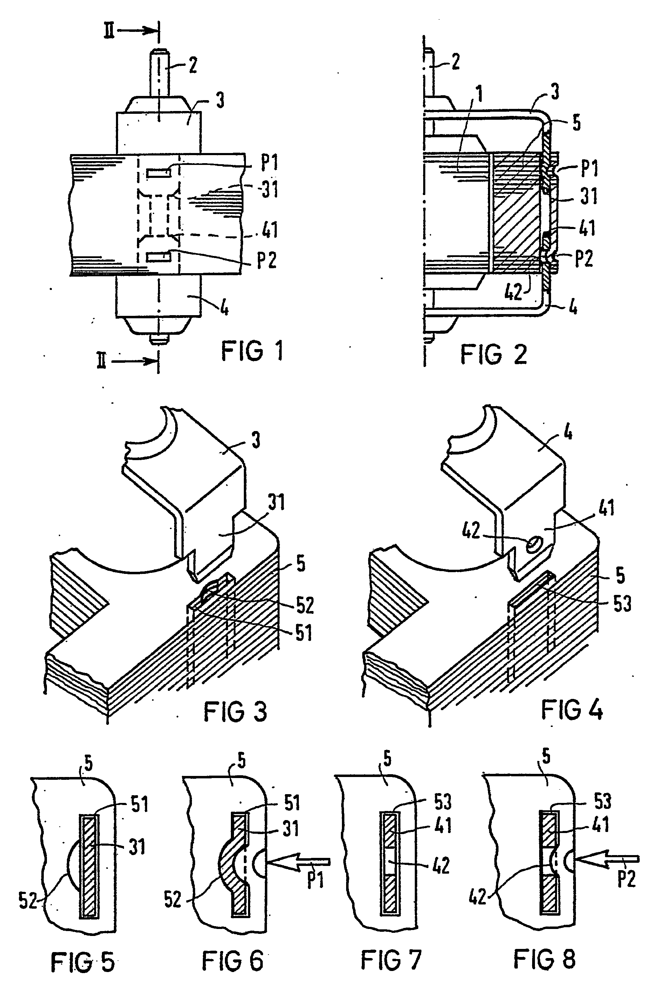

Fig.1,2 zeigen einen Rotor 1 eines Elektrokleinmotors der über eine Rotorwelle 2 und stirnseitige Lager in einem oberen Blechlagerbügel 3 und in einem unteren Blechlagerbügel 4 drehbar gelagert ist. Die Blechlagerbügel 3 bzw.4 weisen - wie auch aus Fig.3,4 ersichtlich - im wesentlich axial vorstehende, angeformte Laschen 31 bzw.41 auf, die in fertigmontiertem Zustand des Elektrokleinmotors in Einstecköffnungen 51 bzw.53 des Statorblechpaketes 5 eingetaucht und dort formschlüssig verstemmt sind.

Fig.3,4 zeigen den Montagezustand unmittelbar vor dem Eintauchen der axial vorstehenden Laschen 31 bzw.41 der Lagerbügel 3 bzw.4 in die Einstecköffnungen 51 bzw.53 des Statorblechpaketes 5. Während bei der Ausführung gemäß Fig.3 die axial vorstehende Lasche 31 keine Ausnehmung aufweist, ist in der Einstecköffnung 51 an deren radial innerer Auflagefläche für die Lasche 31 zusätzlich mittig eine Ausnehmung 52 vorgesehen; bei der Ausführung gemäß Fig.4 weist die Einsecköffnung 53 im Statorblechpaket eine ebene radial innere und radial äußere Auflagefläche für die Lasche 41 auf, jedoch ist nunmehr eine Ausnehmung 42 in der Lasche 41 im Bereich der späteren Verformung vorgesehen. In vorteilhafter Weise werden die zuvor dargestellten Ausnehmungen durch Freistanzungen gebildet.

Fig.5 zeigt die Ausführung von Lagerbügel 3 und Statorblechpaket 5 gemäß der Ausführung nach Fig.3 nach dem Einstecken der Blechlaschen 31 in die Einsecköffnung 51 jedoch vor dem Verformen durch das Verstemmwerkzeug; Fig.6 zeigt die Ausführung gemäß Fig.5 nach dem eigentlichen Verformungsvorgang durch ein an der Außenfläche des Statorblechpaketes im wesentlichen radial einwirkendes Verstemmwerkzeug P1. Es wird aus Fig.6 ersichtlich, daß trotz einer nur geringen äußeren Verformung des Statorblechpaketes 5 eine wirksame formschlüssige, in Form einer Hinterschneidung ausgebildete, axial verschiebesichere Verbindung zwischen eingeschobener Blechlasche 31 und Statorblechpaket 5 gewährleistet werden kann, da das Laschenmaterial bereits bei geringem Verstemmdruck in die Ausnehmung 52 eindringen kann.

Fig.7 zeigt im Detailausschnitt die eingeschobene Blechlasche 41 gemäß Fig.4 vor der Verformung durch ein Verstemmwerkzeug und Fig.8 die gleiche Anordnung nach der Verformung des Statorblechpaketes 5 durch an der Außenfläche der Einsecköffnung 53 einwirkendes Verstemmwerkzeuges P2.

Auch im Fall der Ausführung nach Fig.4 und Fig.7,8 wird durch einen relativ geringen Verstemmdruck P2 und einer nur unwesentlichen Verformung des Statorblechpaketes 5 eine gute formschlüssige Verbindung erreicht, da das verformte Blechpaket-Material in die freigestanzte Öffnung 42 der Lasche 41 des Blechlagerbügels 4 ausweichen bzw. eindringen kann.

Fig.2 zeigt im Schnittbild den fertigmontierten Elektrokleinmotor mit im oberen Teil nach der Ausgestaltung gemäß Fig.3 bzw. Fig.5,6 und im unteren Teil nach der Ausgestaltung gemäß Fig.4 bzw. Fig.7,8 erzielbaren formschlüssigen Verbindung zwischen dem Blechlagerbügel 3 bzw. dem Blechlagerbügel 4 und dem Statorblechpaket 5.

## Patentansprüche

1. Am Ständerblechpaket (5) einer elektrischen Maschine befestigter Lagerbügel (3 bzw. 4) mittels eines am Umfang axial vorstehend angeformten, in eine korrespondierende Öffnung (51 bzw. 53) des Ständerblechpaketes (5) radial und axial formschlüssig fixierbaren Randbereichs, dadurch gekennzeichnet, daß der Lagerbügel (3 bzw. 4) mit einer im wesentlichen axial vorstehenden Lasche (31 bzw. 41) in einer axial in dem Ständerblechpaket (5) verlaufenden Einsecköffnung (51 bzw. 53) radial zentriert dicht unterhalb der äußeren Umfangsfläche des Ständerblechpaketes (5) eingesteckt und durch ein außen am Ständerblechpaket (5) oberhalb der axialen Einsecköffnung (51 bzw. 53) angesetztes Verstemmwerkzeug (P1 bzw. P2) durch Verformung des Ständerblechpaketes (5) auch axial formschlüssig fixiert ist.

2. Am Ständerblechpaket einer elektrischen Maschine befestigten Lagerbügel (3 bzw. 4) nach Anspruch 1, dadurch gekennzeichnet, daß die Lasche (41) jeweils eine Ausnehmung (42) im Bereich der Verformung aufweist.

3. Am Ständerblechpaket einer elektrischen Maschine befestigter Lagerbügel (3 bzw. 4) nach Anspruch 1, dadurch gekennzeichnet, daß die Einsecköffnung (51) an ihrer radial innen liegenden Seite neben einer radialen Auflagefläche für die eingesteckte Lasche (31) jeweils eine radial vertiefte Ausnehmung (52) im Bereich der Verformung aufweist.

4. Am Ständerblechpaket einer elektrischen Maschine befestigter Lagerbügel (3 bzw. 4) nach einem der Ansprüche 1 bis 3, dadurch gekennzeichnet, daß die Einsecköffnung (51 bzw. 53) bzw. die radial vertiefte Ausnehmung (52) jeweils durch Freistanzungen der einzelnen hintereinandergestapelten Blechlamellen zumindest des Ständerblechpaketteils im Bereich der Lasche (31 bzw. 41) gebildet ist.

## Claims

1. Bearing bracket (3 or 4) secured to the stator core (5) of an electrical machine by means of an edge region which is moulded on to the periphery and protrudes axially and which may be secured into a corresponding opening (51 or 53) of the stator core (5) so as to form-fit radially and axially, caracterised in that the bearing bracket (3 or 4) has a substantially axially protruding lug (31 or 41) which is inserted in an insertion opening (51 or 53) running axially in the stator core (5) just beneath the outer peripheral surface of the stator (5), centred radially, and is fixed in position by a peening tool (P1 or P2) applied externally to the stator core (5) above the axial insertion opening (51 or 53) so as also to form-fit axially as a result of deformation of the stator core (5).

2. Bearing bracket (3 or 4) secured to the stator core of an electrical machine, according to claim 1, characterised in that the lug (41) has in each case a recess (42) in the region of deformation.

3. Bearing bracket (3 or 4) secured to the stator core of an electrical machine, according to claim 1, characterised in that in the region of deformation the side of the insertion opening (51) which lies radially inside has in each case a radially indented recess (52) adjoining a radial bearing surface for the inserted lug (31).

4. Bearing bracket (3 or 4) secured to the stator core of an electrical machine, according to one of claims 1 to 3, characterised in that the insertion opening (51 or 53) or the radially indented recess (52) is formed in each case by punching out the individual sheet metal sheets stacked one after another at least of the stator core part in the region of the lug (31 or 41).

**Revendications**

1. Etrier de support (3 ou 4) fixé à un paquet (5) de tôles statoriques d'une machine électrique par l'intermédiaire d'une zone marginale façonnée de manière à être saillante axialement sur la périphérie et pouvant être fixée radialement et axialement, selon une liaison par formes complémentaires, dans une ouverture correspondante (51 ou 53) du paquet (5) de tôles statoriques, caractérisé par le fait que l'étrier de support (3 ou 4) est enfiché, dans une position centrée radialement et d'une manière étanche, au-dessous de la surface circonférentielle extérieure du paquet de tôles statoriques (5), au moyen d'une patte (31 ou 41), qui fait saillie sensiblement axialement, dans une ouverture d'enfichage (51 ou 53) s'étendant axialement dans le paquet de tôles statoriques (5), et est également fixée axialement selon une liaison par formes complémentaires, à l'aide d'un outil de blocage (P1 ou P2) mis en place extérieurement sur le paquet de tôles statoriques (5) au-dessus de l'ouverture axiale d'enfichage (51 ou 53), par déformation du paquet de tôles statoriques (5).

2. Etrier de support (3 ou 4) fixé sur le paquet de tôles statoriques d'une machine électrique suivant la revendication 1, caractérisé par le fait que la patte (41) possède respectivement une ouverture (42) dans la zone de déformation.

3. Etrier de support (3 ou 4) fixé sur le paquet de tôles statoriques d'une machine électrique suivant la revendication 1, caractérise par le fait que l'ouverture d'enfichage (51) comporte sur son côté, intérieur du point de vue radial, un côté d'une surface radiale d'application pour une patte enfichée (31), un évidement respectif (52), s'étendant radialement en renfoncement, dans la zone de déformation.

4. Etrier de support (3 ou 4) fixé sur le paquet de tôles statoriques d'une machine électrique suivant l'une des revendications 1 à 3, caractérisé par le fait que l'ouverture d'enfichage (51 ou 53) ou l'évidement (52), qui s'étend radialement en renfoncement, est formé respectivement par des découpages des différentes lamelles de tôle empilées les unes contre les autres au moins de la partie du paquet de tôles statoriques, située au voisinage de la patte (31 ou 41).

**FIG 1**

**FIG 2**

**FIG 3**

**FIG 4**

**FIG 5**

**FIG 6**

**FIG 7**

**FIG 8**